Europäisches Patentamt

European Patent Office

Office européen des brevets

(11) Veröffentlichungsnummer: **0 412 332 A1**

# EUROPÄISCHE PATENTANMELDUNG

(21) Anmeldenummer: 90113805.7

(22) Anmeldetag: **19.07.90**

(51) Int. Cl.5: **B01D 35/28**

(30) Priorität: **07.08.89 DE 3926082**

(43) Veröffentlichungstag der Anmeldung:
**13.02.91 Patentblatt 91/07**

(84) Benannte Vertragsstaaten:
**BE DE ES FR GB IT LU NL SE**

(71) Anmelder: **Hein, Lehmann Trenn- und Fördertechnik GmbH**
**Fichtenstrasse 75**
**D-4000 Düsseldorf 1(DE)**

Anmelder: **Isenmann Siebe GmbH**
**Gerwigstrasse 67**
**D-7500 Karlsruhe(DE)**

(72) Erfinder: **Schmidt, Gerhard**
**Eichenweg 15**
**D-7505 Ettlingen(DE)**
Erfinder: **Schmidt, Heinrich**
**Artusstrasse 64**
**D-4000 Düsseldorf 30(DE)**
Erfinder: **Neukam, Christian**
**Friedrich-Naumann-Strasse 52**
**D-7500 Karlsruhe 21(DE)**

(74) Vertreter: **Patentanwaltsbüro Cohausz & Florack**
**Schumannstrasse 97**
**D-4000 Düsseldorf 1(DE)**

(54) **Siebvorrichtung.**

(57) Die Erfindung betrifft eine Siebvorrichtung zum Trennen von Feststoff-Flüssigkeitsgemischen mit einem sich nach unten verjüngenden Siebkorb, dessen Korbinnenwand eine von oben nach unten zunehmende Neigung ($\alpha$) aufweist, wobie die Siebguraufgabe am oberen Ende des Siebkorbes etwa tangential erfolgt und das Siebgut schraubenförmig mit enger werdenden Radien nach unten fließt, wobei die Siebkorbwand mindestens einen schraubenförmigen nach innen offenen Kanal bildet, der oben und unten von schraubenförmigen Seitenwänden begrenzt ist, zwischen denen der Sieböffnungen aufweisende Kanalboden angeordnet ist, dessen Radius von oben nach unten abnimmt und der gegen die vertikale Achse um den Winkel ($\alpha$) geneigt ist, derart, daß beim Einlauf die Neigung zuerst klein ist und dann stetig zunimmt.

Fig.1

EP 0 412 332 A1

## SIEBVORRICHTUNG

Die Erfindung betrifft eine Siebvorrichtung zum Trennen von Feststoff-Flüssigkeitsgemischen, mit einem sich nach unten verjüngenden Siebkorb, dessen Korbinnenwand eine von oben nach unten zunehmende Neigung aufweist, wobei die Siebgutaufgabe am oberen Ende des Siebkorbes etwa tangential erfolgt und das Siebgut schraubenförming mit enger werdenden Radien nach unten fließt.

In der Aufbereitungstechnik sind für den gleichen Zweck unter anderem Bogen-Siebe und Zentrifugal-Siebe im Einsatz. Bei Bogen-Sieb fließt in der Regel die Trübe über ein Überlaufwehr in dünner Schicht aus einer Höhe von ca. 460 m auf das Sieb. Diese Höhe ergibt eine Aufgabegeschwindigkeit von ca. v = 3 m/s. Beim Zentrifugal-Sieb wird die Trübe über eine Düse mit großer Geschwindigkeit tangential in einen großen, horizontalen Ring aufgegeben. Dieser besteht aus einem U-förmigen, nach innen offenen Kanal, dessen Rückseite durch den Siebbelag gebildet wird, der spiralig enger werdend verläuft. Das weitgehend entwässerte Gut erreicht anschließend einen kegligen Siebkorb zur Nachentwässerung, DE-A 35 15 891.

Bei der großen Aufgabegeschwindigkeit (v = 7 - 8 m/s) entsteht eine erhebliche Fliehkraft, durch welche eine Entmischung der Trübe stattfindet. Da der Feststoff in der Regel schwerer als die Flüssigkeit ist, sammelt er sich im Siebbereich außen an. Nach einem Umlauf strömt praktisch nur die vorgereinigte Flüssigkeit nach unten ab, während Feststoff weiter im Umlauf auf dem Sieb verbleibt. Durch die Neuaufgabe wird dann die Feststoffschicht immer dicker. Das bewirkt einerseits eine Vergrößerung des Durchgangswiderstandes für die flüssige Phase durch das Sieb, d.h. eine verringerte Entwässerungsleistung, und zum anderen erhöht die dicke Feststoffschicht den Verschleiß der Siebelemente.

Aufgabe der Erfindung ist es, eine Siebvorrichtung der eingangs genannten Art so zu verbessern, daß bei einfacher Konstruktion, hoher Entwässerungsleistung und optimaler Führung des Gemisches der Feststoff sich nicht anreichert, sondern sicher durch den U-förmigen, glatten Kanal ausgetragen wird.

Diese Aufgabe wird erfindungsgemäß dadurch gelöst, daß die Siebkorbwand mindestens einen schraubenförmigen nach innen offenen Kanal bildet, der oben und unten von schraubenförmigen Seitenwänden begrenzt ist, zwischen denen der Sieböffnungen aufweisende Kanalboden angeordnet ist, dessen Radius von oben nach unten abnimmt. Der Kanalboden ist oben wenig (Winkel $\alpha_1$

etwa 7°) nach außen geneigt. Nach unten hin nimmt der Winkel stetig zu bis etwa $\alpha_2$ = 40°.

Hierdurch ist gewährleistet daß das Gemisch genau und berechenbar geführt wird, wobei neben einer hohen Siebleistung ein guter Austrag des Feststoffes erzielt wird.

Konstruktiv besonders einfach ist es, wenn die Kanalseitenwände von einem im Querschnitt etwa waagerechten durchgehend verlaufenden schraubenförmigen Band, insbesondere Blechstreifen gebildet sind. Zur Verschleißminderung sind die Kanalseitenwände mit einer Kunststoffschicht belegt. Hierbei kann die Kunststoffschicht auch die vordere Stirnkante des Bandes umgeben.

Besonders vorteilhaft ist es, wenn zwischen den Kanalseitenwänden Kunstoffsiebelemente als Kanalboden lösbar befestigt sind, so daß sie leicht und schnell ausgewechselt werden können.

Ein sicherer halt bei einfacher Konstruktion und Auswechselbarkeit wird erreicht, wenn die Kanalseitenwände, insbesondere die Kunststoffbeschichtung der Kanalseitenwände Ausnehmungen und/oder Vorsprünge aufweisen, in die Vorsprünge und/oder Ausnehmungen der Kunststoffsiebelemente formschlüssig einliegen. Hierbei wird vorgeschlagen, daß der obere und untere Rand der Kunststoffsiebelemente als Vorsprung in Nuten der Kanalseitenwände einliegt. Auch können hierzu die Ränder und Nuten einen abgerundeten, insbesondere halbkreisförmigen Querschnitt aufweisen.

Von Vorteil ist auch, wenn im Einlaufbereich die Siebinenwand nahezu senkrecht steht, wenn das Gemisch durch eine tangentiale Düse aufgegeben wird und wenn der Siebkorb in Schwingungen oder Vibrationen versetzbar ist.

Ein Ausführungsbeispiel der Erfindung ist in der Zeichnung dargestellt und wird im folgenden näher beschrieben. Es zeigen

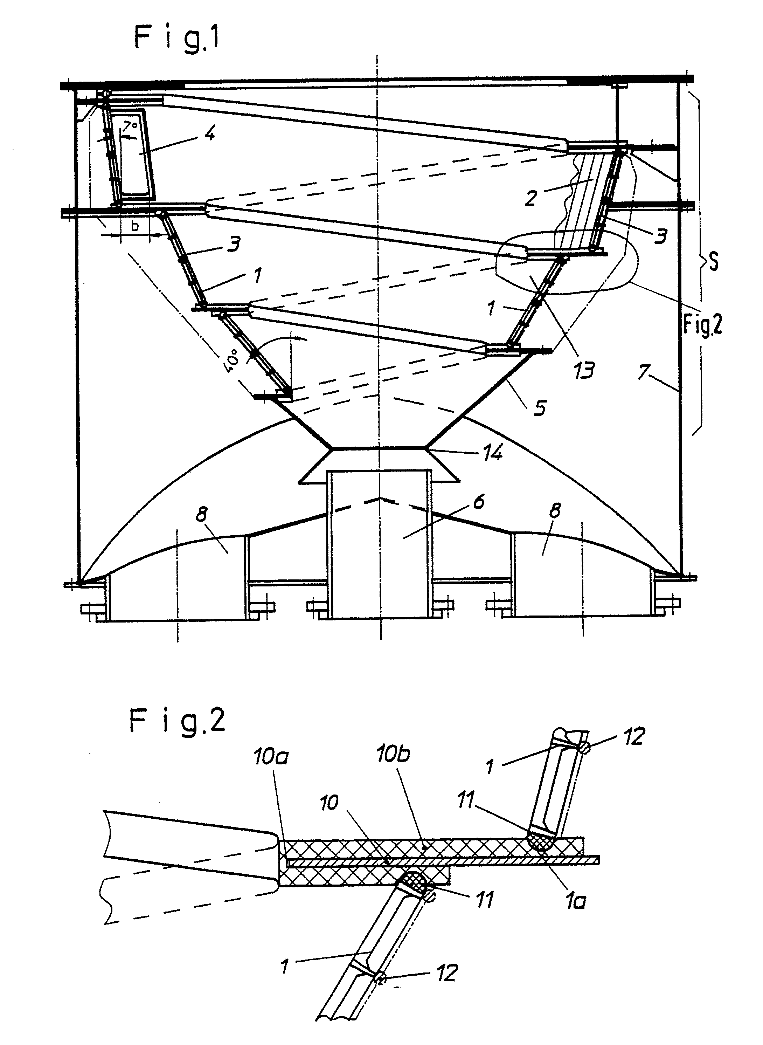

Figur 1 einen senkrechten Axialschnitt durch die Siebvorrichtung und

Figur 2 den Ausschnitt A aus Figur 1 in größerem Maßstab.

Der Siebkorb S weist ein im Querschnitt waagerechtes, durchgehend verlaufendes schraubenförmiges Band, insbesondere einem Blechstreifen 10 auf, dessen Innenkante 10a sich im Radius nach unten hin verringert. Der Blechstreifen 10 ist einschließlich seiner Innenkante 10a mit einer Kunststoffschicht 10b beidseitig belegt. Die Schicht 10b ist U-förmig von innen auf den Blechstreifen 10 aufgesteckt. In der Schicht 10b sind schraubenförmig Nuten 11 parallel zur Kante 10a an der Ober- und Unterseite des Blechstreifens 10. In diesen Nuten 11 liegen Kunststoffsiebelemente 1 mit ihren abgerundeten oberen und unteren Seiten 1a lösbar ein. Die Siebelemente können Bewehrungen aufweisen und/oder auf einem äußeren Stützgerüst 12 aufliegen. Blechstreifen 10 und Siebelemente 1 bilden somit einen etwa U-förmigen schraubenförmigen Kanal 13, dessen Radius sich von oben nach unten verringert. Der unterste Bereich des Siebbodens des Kanals 13 weist die größte, und der oberste Bereich die geringste Neigung auf, so daß der Neigungswinkel α des Kanalbodens unten am größten und oben am kleinsten ist. Am untersten Korbbereich ist ein Trichter 5 befestigt, durch den der Feststoff zentral zum Austrag 6 geleitet wird. Die Flüssigkeit fließt in das die Vorrichtung umgebende Gehäuse 7, das einen oder mehr Auslaß 8 am unteren Ende aufweist.

Die Siebfläche 1 wird rückwärtig von einer Reihe in Spiralform befestigter Stäbe 12 gestützt. Auf die Siebfläche 1 wird das Siebgut bzw. das Feststoff-Flüssigkeitsgemisch durch eine düsenförmige tangentiale Aufgabevorrichtung 4 eingebracht, wo die Siebfläche 1 den größten Radius aufweist, das Gemisch tangential mit hoher Geschwindigkeit etwa waagerecht einbringt. Das Gemisch fließt dann entlang des abfallenden spiralförmigen Bereichs mit steilster Siebwandung bis zu der Siebbelagstelle des Bereichs mit dem kleinen Radius, um dort dann zum Kanal 13 zu gelangen.

Der Korb kann mit gängigen Kunststoffsiebelementen belegt sein, wobei Spaltsiebe vorgezogen werden, deren Spalte 3 im oberen Bereich senkrecht bzw. parallel zur Erzeugenden der Wandung liegen und im unteren Bereich in Umfangsrichtung laufen können, um bei der dort verhältnismäßig niedrigen Geschwindigkeit das Abtropfen der Restflüssigkeit aus dem sich ansammelnden Feststoff zu begünstigen, so daß dann kaum Flüssigkeit zur Austragsöffnung 14 gelangen kann.

Durch die Reibung auf dem Sieb wird die Geschwindigkeit v immer mehr verringert. Durch die Siebspalten wird ständig Flüssigkeit abgezogen. Was auf dem Siebkorb verbleibt, enthält immer mehr Feststoff; die Viskosität und die Reibung am Sieb steigen an. Bei konstantem Neigungswinkel und ohne die Kanalseitenwände 10 würde der Flüssigkeitsstrom schnell steil nach unten zum Feststoffaustrag gelangen. Die nach unten zunehmenden Neigungswinkel α und die Wände 10 wirken dem entgegen, so daß der Großteil der Flüssigkeit durch die Siebspalten abgeschieden wird und nur noch der eingedickte Feststoffbrei zur unteren Austragsöffnung gelangt. Die Restentwässerung wird durch die unten quer verlaufenden Siebspalten noch begünstigt.

Wie beim bekannten Bogensieb ist es möglich, durch Wahl der Spaltweite 3 der Siebe das "Grenzkorn" des Feststoffes zu bestimmen, d.h. die Größe des gröbsten Kornes, das mit der Flüssigkeit ausgetragen wird, und das feinste Korn, das noch im Feststoffanteil verbleibt.

Der Austrag und die Nachentwässerung des Feststoffes kann noch verbessert werden durch hochfrequente, axiale Schwingungen des ganzen kegligen Korbes oder nur seines unteren Bereichs. Diese Schwingungen können durch Unwuchtmotore oder Wechselstrommagnete erzeugt werden.

Das Sieb mit vertikaler Achse besteht somit aus einem nach innen offenen U-förmigen Kanal 13, der kegeli-gschraubenförmig sich im Durchmesser verkleinernd nach unten geführt wird, ohne jede Unterbrechung. Beschickt wird der Kanal oben mit einer tangential angeordneten Düse. Um eine gleichmäßige Schichtverteilung auf dem Sieb zu gewährleisten, ist im Einlaufbereich der Siebboden beispielsweise um den Winkel $\alpha_1 = 7°$ gegen die Vertikale geneigt. Durch Reibung wird die Strömungsgeschwindigkeit immer mehr verringert. Deshalb wird der Neigungswinkel von anfangs $\alpha_1 = 7°$ bis zum Auslauf aufs $\alpha_2 = 40°$ vergrößert.

Hier unter dem Winkel 40° kann der eingedickte Feststoff in den zentralen Trichter 5 abtropfen, während das Wasser durch das äußere Gehäuse 7 aufgefangen und am Boden abgeführt wird. Der Siebbelag besteht zweckmäßigerweise aus einem elastischen Werkstoff, z.B. Polyurethan, und weist Siebspalten 3 auf, die quer zur Strömungsrichtung stehen.

Die Düse ist leicht auswechselbar. Mit der unterschiedlichen Breite b wird der Düsenquerschnitt der jeweiligen Aufgabemenge so angepaßt, daß die günstige Aufströmgeschwindigkeit von v = 7 - 8 m/s erreicht wird. Der eingedickte Feststoff wird durch den Trichter 5 zentral in den Feststoff-Austrag 6 geleitet. Die abgeschiedene Flüssigkeit wird im Gehäuse 7 aufgefangen und am Boden durch ein oder zwei Rohre 8 abgeführt.

## Ansprüche

1. Siebvorrichtung zum Trennen von Feststoff-Flüssigkeitsgemischen mit einem sich nach unten verjüngenden Siebkorb, dessen Korbinnenwand eine von oben nach unten zunehmende Neigung (α) aufweist, wobei die Siebgutaufgabe am oberen Ende des Siebkorbes etwa tangential erfolgt und das Siebgut schraubenförmig mit enger werdenden Radien nach unten fließt, **dadurch gekennzeichnet,** daß die Siebkorbwand mindestens einen schraubenförmigen nach innen offenen Kanal bildet, der oben und unten von schraubenförmigen Seitenwänden begrenzt ist, zwischen denen der Sieböffnungen aufweisende Kanalboden angeordnet ist, dessen Radius von oben nach unten abnimmt und der gegen die vertikale Achse um den Winkel (α) geneigt ist, derart, daß beim Einlauf die Neigung zuerst klein ist und dann stetig zunimmt.

2. Siebvorrichtung nach Anspruch 1, **dadurch gekennzeichnet,** daß die Kanalseitenwände von einem im Querschnitt etwa waagerechten, durchgehend verlaufenden schraubenförmigen Band, insbesondere Blechstreifen gebildet sind.

3. Sieborrochtung nach Anspruch 1 oder 2, **dadurch gekennzeichnet,** daß die Kanalseitenwände mit einer Kunststoffschicht belegt sind.

4. Siebvorrichtung nach Anspruch 3, **dadurch gekennzeichnet,** daß die Kunststoffschicht auch die vordere Stirnkante des Bandes umgibt.

5. Siebvorrichtung nach einem der vorherigen Ansprüche, **dadurch gekennzeichnet,** daß zwischen den Kanalseitenwänden Kunstoffsiebelemente als Kanalboden lösbar befestigt sind.

6. Siebvorrichtung nach Anspruch 5, **dadurch gekennzeichnet,** daß die Kanalseitenwände, insbesondere die Kunststoffbeschichtung der Kanalseitenwände Ausnehmungen und/oder Vorsprünge aufweisen, in die Vorsprünge und/oder Ausnehmungen der Kunststoffsebelemente formschlüssig einliegen.

7. Siebvorrichtung nach Anspruch 6, **dadurch gekennzeichnet,** daß der obere und untere Rand der Kunststoffsiebelemente als Vorsprung in Nuten der Kanalseitenwände einliegt.

8. Siebvorrichtung nach Anspruch 7, **dadurch gekennzeichnet,** daß Ränder und Nuten einen aberundeten, insbesondere halbkreisförmigen Querschnitt aufweisen.

9. Siebvorrichtung nach einem der vorherigen Ansprüche, **dadurch gekennzeichnet,** daß im Einlaufbereich die Siebinnenwand leicht geneigt nach außen steht, und die Neigung nach unten stetig zunimmt.

10. Siebvorrichtung nach einem der vorherigen Ansprüche, **dadurch gekennzeichnet,** daß das Gemisch durch eine tangentiale Düse (4) aufgegeben wird.

11. Siebvorrichtung nach einem der vorherigen Ansprüche **dadurch gekennzeichnet,** daß der Siebkorb in Schwingungen oder Vibrationen versetzbar ist.

# F i g.1

# F i g.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>EP - A2/A3 - 0 200 096</u><br>(HEIN LEHMANN AKTIENGESELL-<br>SCHAFT)<br>* Ansprüche 1-11; Fig. 1 *<br>-- | 1-11 | B 01 D 35/28 |
| D,A | <u>DE - A1 - 3 515 891</u><br>(HEIN LEHMANN AKTIENGESELL-<br>SCHAFT)<br>* Ansprüche 1-4; Fig. 1 *<br>-- | 1-11 | |
| A | <u>US - A - 4 269 703</u><br>(BRÜDERLEIN)<br>* Zusammenfassung; Fig. *<br>---- | 1,2,9,<br>11 | |
| | | | **RECHERCHIERTE SACHGEBIETE (Int Cl⁵)**<br><br>B 01 D 35/00 |

Der vorliegende Recherchenbericht wurde für alle Patentansprüche erstellt.

| Recherchenort | Abschlußdatum der Recherche | Prüfer |
|---|---|---|
| WIEN | 31-10-1990 | BRUS |